# EUROPEAN PATENT APPLICATION

(11) **EP 1 074 210 A1**
(43) Date of publication of application: **07.02.2001**
(21) Application number: 99830504.9
(22) Date of filing: 04.08.1999
(51) Int. Cl.: A47J 31/46

(54) **Espresso coffee machine**

(71) Applicant: Nuova Faema S.p.A., 20097 San Donato Milanese (Milano) (IT)
(72) Inventor: Giuliano, Mario, 12100 Cuneo (IT)
(74) Representative: Long, Giorgio

(57) **Abstract**

An espresso coffee machine (1) comprising a dispensing device (6) associated with a fluid circuit (3, 3') and means (5) for heating the water contained in the said fluid circuit (3, 3') is characterized in that it comprises controllable means (11) for regulating the flow in the said fluid circuit (3, 3') in order to allow the water to be conveyed to the said dispensing device (6) at a given temperature.

## Description

The present invention relates to an espresso coffee machine of the type comprising a dispensing device associated with a fluid circuit and means for heating the water contained in this circuit.

It is known that the operating temperature of the dispensing apparatus in an espresso coffee machine must be selected on the basis of the type of blend used and on the type of coffee to be produced.

Indeed, as is known, the ever greater variety of coffee blends available on the market and having different characteristics - which depend on the type of coffee beans used in the blend and on the method and intensity of roasting - dictate often widely varying operating temperatures for the water in the dispensing device.

Depending on the blend used, these operating temperatures can vary from 90°C when preparing what is known as a "long" espresso, consisting of a 120 ml cupful and usually served in Northern Europe countries, to 102°C for a dark, concentrated coffee consisting of a 20 ml cupful and generally served in the regions of Southern Italy.

In order to ensure that the coffee infusion is dispensed consistently and in the optimum manner, the dispensing unit has to be kept at the pre-set dispensing temperature for the entire time the machine is switched on.

In conventional coffee machines, according to one embodiment in common use, the water is circulated in a suitable circuit and is heated in a heat exchanger associated with this circuit and inserted in a steam generator, the water subsequently being used to dispense the coffee at the end. A recycling pipe ensures that the dispensing unit is kept preheated, even while it is on standby.

These machines are constructed such that the operating temperature of the dispensing device is pre-set to a precisely defined value selected on the basis of the type of coffee blend used and on the dispensing requirements of the region in which the machine is sold.

Even though the operating temperature can be modified to meet specific requirements, such modifications are particularly awkward since the machine needs to be switched off and certain parts of the fluid circuit need to be changed. What is more, this type of procedure has to be carried out by specialized personnel, which makes the whole operation even more complex.

There is therefore a need to provide an espresso coffee machine which can easily be adapted to the various requirements imposed by the types of coffee blends used and the type of coffee preferred in the various areas of consumption.

The technical problem on which the present invention is based is to provide an espresso coffee machine which satisfies the abovementioned requirements without exhibiting the disadvantages referred to previously with regard to the prior art.

This problem is solved by an espresso coffee machine comprising a dispensing device associated with a fluid circuit and means for heating the water contained in the said fluid circuit, characterized in that it comprises controllable means for regulating the flow in the said fluid circuit in order to allow the water to be conveyed to the said dispensing device at a given temperature.

Additional features and advantages of the espresso coffee machine according to the present invention will appear more clearly from the description given below of a preferred embodiment thereof which is given by way of non-limiting example with reference to the appended figures, in which:
- Figure 1 diagrammatically shows an espresso coffee machine according to the invention,
- Figure 2 shows a sectional view on an enlarged scale of a detail of the machine shown in Figure 1,
- Figure 3 diagrammatically shows an espresso coffee machine according to a different embodiment of the present invention.

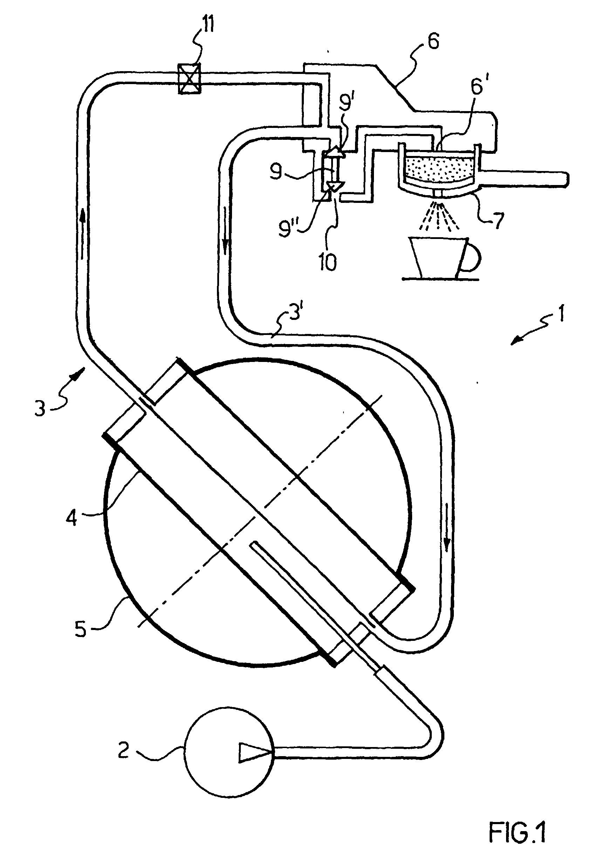

With reference to Figure 1, an espresso coffee machine is denoted, overall, by the reference 1.

The machine 1 comprises a pump 2 which keeps the fluid circuit 3 with which it is in fluid communication under pressure.

A heat exchanger 4 is inserted along the fluid circuit 3 and is also associated with suitable means for heating the water which, in the present embodiment, consist of a steam generator 5 in which the said heat exchanger 4 is inserted. Alternatively, the fluid circuit 3 is heated directly by a series of heating elements in contact therewith.

Located downstream of the fluid circuit 3 is a device 6 for dispensing the coffee infusion which is designed to accommodate a filter-holder 7 fitted with a handle 8. A filter designed to contain the coffee blend can be removably inserted into the filter-holder 7.

The dispensing device 6 comprises, upstream of the dispensing outlet 6', a system of valves 9 for intercepting the flow of water which connects the circuit 3 to the dispensing outlet 6' and to a discharge outlet 10. The system of valves 9 comprises a first shut-off member 9' which regulates the flow of water arriving in the dispensing device, and a second shut-off member 9'' which regulates the outflow of residual water towards the discharge outlet.

The fluid circuit 3 also comprises a recycling pipe 3' which connects the dispensing device 6, immediately upstream of the system of valves 9, to the heat exchanger 4. Once the shut-off member 9' has been closed, this recycling pipe 3' allows a thermosiphon circuit to be set up which ensures that the dispensing device 6 is kept constantly heated.

Provided along the fluid circuit 3 are means 11 for regulating the flow of water which, in the drawing, are located on the delivery pipe but which can also be positioned on the recycling pipe 3'.

The way in which the machine 1 operates during the process to dispense the coffee infusion is as follows: the pump 2 pumps the water through the circuit 3 until it reaches the filter-holder 7 containing coffee powder, from where it is then dispensed into the cup in the form of espresso coffee.

As the water travels through the circuit 3, it is first heated in the heat exchanger 4 which is in turn heated by the steam generated in the generator 5.

Thus, by virtue of the system of valves 9 which, as shown in Figure 1, keeps the discharge outlet 10 closed, the pressurized water travels through the dispensing device 6 until it reaches the abovementioned filter-holder 7.

Once the coffee has been dispensed, the system of valves 9 closes the circuit 3 and opens the discharge outlet 10, allowing the standing water in the dispensing device 6, downstream of the shut-off member 9', to flow out.

At this point the heated water continues to travel along the fluid circuit 3 in the direction shown by the arrows in Figure 1, returning to the heat exchanger 4 via the recycling pipe 3'. In this way, the dispensing device 6 is kept at the operating temperature by the hot water travelling through this circuit. The temperature of the dispensing device 6 is dependent on the amount of hot water circulating in it, which can, in turn, be regulated via the flow regulating means 11 provided on the fluid circuit 3.

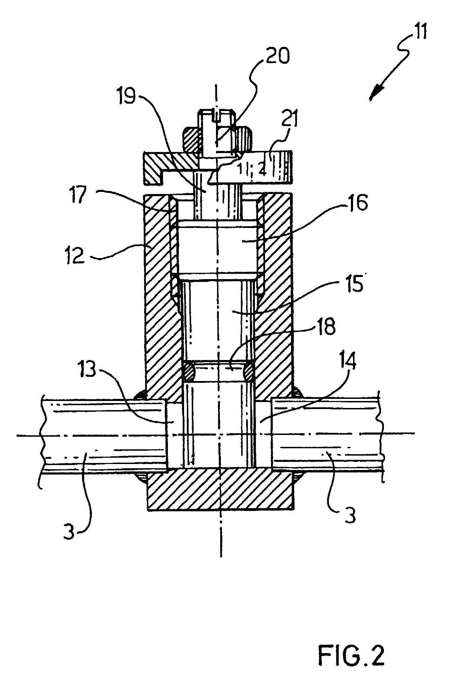

One embodiment of the regulating means 11 is described below with reference to Figure 2.

These means 11 consist of a valve comprising a hollow cylindrical body 12 having two apertures 13, 14 at the bottom to accommodate two branches of the fluid circuit 3 of the machine 1 and a shut-off member 15 which is inserted in the body 12 so that it can move axially and thus intercept the flow of water in the circuit 3.

The shut-off member 15 comprises a threaded portion 16 which engages with a corresponding threaded portion 17 on the body 12 so as to form a screw-and-nut connection, known per se.

The shut-off member also comprises a seal 18 at the bottom, in the vicinity of the flow in the circuit 3, and terminates at the top in a stem 19 which projects axially out of the body 12. The shut-off member 15 shown in Figure 2 has a cylindrical body and a flat base, but it could alternatively have a conical base.

The stem 19 carries means for operating the shut-off member 15, which means consist of a screw 20 in the present embodiment and allow the shut-off member 15 to be operated so as to reduce or enlarge the section of the circuit 3 transverse to the direction of flow.

The stem 19 also bears a graduated scale 21 which enables the angle of rotation of the screw 20, and therefore the state of advance of the shut-off member 15, to be determined accurately.

The graduated scale 21 consists of a ring nut which rotates integrally with the stem 19 and bears reference numerals designed to indicate the angular position of the screw 20 with respect to a fixed reference mark on the cylindrical body 12.

With each angular position of the screw 20 corresponding to a reference numeral on the ring nut 21, the cross section of the circuit 3 is reduced by a specific amount, thereby allowing the flow of water travelling through this circuit to be regulated such that the water in the dispensing device 6 of the machine 1 is at a given temperature.

Clearly, the valve described above can be substituted with another type of gate valve.

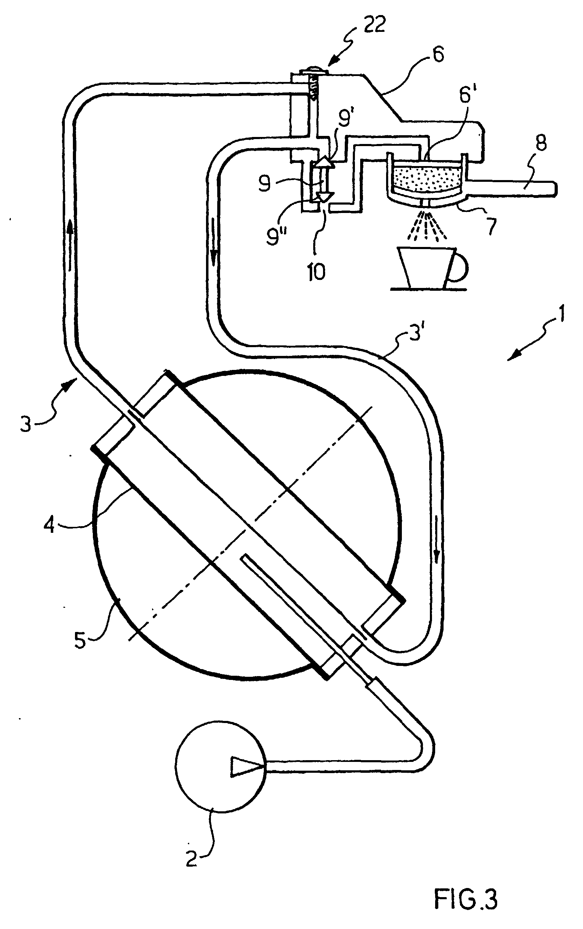

Figure 3 shows a variant embodiment of the present invention.

The means 11 for regulating the flow of hot water are represented here by a valve 22 identical to the valve described above with reference to Figure 2. The difference here is that this valve has been positioned in the dispensing device 6, in particular in the region of the elbow of the fluid circuit 3, found in the area immediately upstream of the system of valves 9, from which the recycling pipe 3' branches off. This gives a more compact machine, with the control means for regulating the temperature of the dispensing device 6 being positioned on the device itself. This feature also makes maintenance easier.

The main advantage of the espresso coffee machine according to the invention lies in the fact that, by regulating the flow of water using means that can be controlled from the exterior, it is possible to set various operating temperatures for the dispensing device without necessarily having to modify individual machine components.

The machine according to the invention can therefore advantageously be used to dispense espresso coffee suited to local requirements using any coffee blend.

An additional advantage of the machine according to the invention lies in its structural simplicity which, in addition to conventional components, requires only flow regulating means which are in themselves simple and economical to produce.

A further advantage of the present invention lies in the fact that the flow regulating means, like those mentioned previously with reference to Figures 1 and 2, can also be applied to espresso coffee machines already in use in order to enable them to operate at different temperatures of the dispensing device.

Needless to say, a person skilled in the art can, in order to fulfil specific and contingent requirements, make numerous modifications and variations to the machine described above, all such modifications and variations being moreover contained within the scope of protection of the invention, as defined in the following claims.

## Claims

1. Espresso coffee machine (1) comprising a dispensing device (6) associated with a fluid circuit (3, 3') and means (5) for heating the water contained in the said fluid circuit (3, 3'), characterized in that it comprises controllable means (11) for regulating the flow in the said fluid circuit (3, 3') in order to allow the water to be conveyed to the said dispensing device at a given temperature.

2. Machine according to Claim 1, in which the said controllable means (11) consist of a valve comprising an essentially cylindrical hollow body (12) having two apertures (13, 14) to accommodate two branches of the said fluid circuit (3, 3') and a shut-off member (15) which is inserted in the said body (12) so that it can move axially and thus intercept the flow of water in the said circuit (3, 3') and is fitted with a stem (19) which projects axially out of the said body (12) and carries means for operating the said shut-off member (15).

3. Machine according to Claim 2, in which the said operating means consist of a screw (20).

4. Machine according to Claim 3, in which the said stem (19) bears a graduated scale (21) in order to determine the angle of rotation of the said screw (20).

5. Machine according to any one of Claims 2 to 4, in which the said shut-off member comprises a seal (18) in the vicinity of the flow in the said fluid circuit (3, 3').

6. Machine according to any one of Claims 2 to 5, in which the said shut-off member (15) has a conical base.

7. Machine according to any one of Claims 1 to 6, in which the said controllable flow regulating means (11) are located along the delivery pipe or along the recycling pipe (3') of the said fluid circuit (3, 3').

8. Machine according to any one of Claims 1 to 6, in which the said controllable flow regulating means (11) are located on the dispensing device (6), in the area immediately upstream of the system of valves (9).
